# EUROPEAN PATENT APPLICATION

(11) **EP 4 591 765 A1**
(43) Date of publication of application: **30.07.2025**
(21) Application number: 24223848.3
(22) Date of filing: 31.12.2024
(51) Int. Cl.: A47J 36/32, A47J 37/06

(54) **COOKING METHOD, COOKING APPLIANCE, CONTROL APPARATUS AND STORAGE MEDIUM**

(30) Priority: 24.01.2024 CN 202410105480; 24.01.2024 CN 202410105472
(71) Applicant: Foshan Shunde Midea Electrical Heating Appliances Manufacturing Co., Ltd., Foshan, Guangdong 528311 (CN)
(72) Inventor: WENG, Jinxing, Guangdong 528311 (CN); SU, YING, Guangdong 528311 (CN); CHEN, Decheng, Guangdong 528311 (CN); CHEN, Fengging, Guangdong 528311 (CN); LI, Huina, Guangdong 528311 (CN)
(74) Representative: RGTH

(57) **Abstract**

Provided are a cooking method, a cooking appliance, a control apparatus, and a storage medium. The cooking method includes: in response to a cooking instruction received from a user, acquiring cooking parameters corresponding to a type of to-be-cooked food indicated by the cooking instruction, and controlling a first heating device, a second heating device, and a fan of the cooking appliance to operate based on the cooking parameters, the cooking parameters includes a first heating temperature for the first heating device, a second heating temperature for the second heating device and a setting duration; and in response to a heating duration being longer than the setting duration, turning off the first and second heating devices. When cooking food, the heating temperatures of the first and second heating devices are controlled based on the cooking parameters corresponding to the type of to-be-cooked food, thereby achieving a best cooking effect of the cooked food.

## Description

### TECHNICAL FIELD

The present disclosure relates to the technical field of household electric device technologies, and more particularly, to a cooking method, a cooking appliance, a control apparatus and a storage medium.

### BACKGROUND

With the users' pursuit of healthy diet, air fryers have gradually appeared in people's vision. The air fryers facilitate the evaporation of the moisture on the surface of the food through high-speed circulation of hot airflow, achieving the cooking effect of frying without the use of oil, thereby reducing the people's intake of oil and making the food healthier. In addition, air fryers require little or no oil and water, and they are easy to operate and have a fast cooking speed.

In the related art, the air fryer drives an airflow, through a fan located at the top, to pass through a heating device to generate a hot airflow, which continuously heats to cook food. At present, it is not possible for air fryers to achieve the same effect as cooking with an open flame when cooking foods.

### SUMMARY

The present disclosure provides a cooking method, a cooking appliance, a control apparatus and a storage medium to alleviate at least part of the above technical problems.

In a first aspect, an embodiment of the present disclosure provides a cooking method, applied to a cooking appliance. The cooking appliance is provided with a pot body, a first heating device, a second heating device and a fan. The first heating device is arranged below the pot body, and is configured to heat the pot body. The second heating device is arranged above the pot body, and the fan is configured to circulate an airflow in the pot body. The cooking method comprises: in response to a cooking instruction received from a user, acquiring cooking parameters corresponding to a type of to-be-cooked food indicated by the cooking instruction, and controlling the first heating device, the second heating device, and the fan to operate, based on the cooking parameter, the cooking parameter comprises a first heating temperature for the first heating device, a second heating temperature for the second heating device, and a setting duration; and in response to a heating duration being longer than the setting duration, turning off the first heating device and the second heating device.

In some embodiments of the disclosure, the first heating temperature is a temperature for a bottom wall of the pot body, and the second heating temperature is a temperature for a cooking cavity of the cooking appliance. When the type of a to-be-cooked food is vegetable, the first heating temperature is higher than the second heating temperature; when the type of the to-be-cooked food is meat, the first heating temperature is lower than the second heating temperature.

In some embodiments of the disclosure, the cooking appliance is further provided with a temperature detecting device configured to acquire a temperature of the cooking cavity of the cooking appliance. The controlling the first heating device, the second heating device, and the fan to operate based on the cooking parameters, comprises: acquiring an initial temperature of the cooking cavity; and adjusting, based on the initial temperature of the cooking cavity and the heating duration, an output power of the first heating device to control a temperature of the first heating device to raise to the first heating temperature.

In some embodiments of the disclosure, when the type of the to-be-cooked food is vegetables, the controlling the first heating device, the second heating device, and the fan to operate based on the cooking parameters, further comprises: adjusting, based on the initial temperature of the cooking cavity and the heating duration, an output power of the second heating device to control a temperature of the second heating device to raise to the second heating temperature.

In some embodiments of the disclosure, the adjusting the output power of the second heating device, comprises: controlling the second heating device to operate in a first mode, to adjust the output power of the second heating device.

In some embodiments of the disclosure, the first mode is a discontinuously heating mode.

In some embodiments of the disclosure, when the type of the to-be-cooked food is meat, the controlling the first heating device, the second heating device, and the fan to operate based on the cooking parameters, further comprises: controlling the second heating device to operate in a second mode, to control a temperature of the second heating device to raise to the second heating temperature; the second mode is a continuously heating mode.

In some embodiments of the disclosure, the adjusting the output power of the first heating device, comprises: determining, based on the initial temperature of the cooking cavity, a heating mode of the first heating device during a first time period;the first time period is shorter than the setting duration; and adjusting, based on the determined heating mode of the first heating device, the output power of the first heating device during the first time period.

In some embodiments of the disclosure, the determining, based on the initial temperature of the cooking cavity, the heating mode of the first heating device, comprises: in response to the initial temperature of the cooking cavity being lower than a first setting temperature, determining the heating mode of the first heating device as a third mode; and in response to the initial temperature of the cooking cavity being equal to or higher than the first setting temperature and lower than a second setting temperature, determining the heating mode of the first heating device as a fourth mode.

In some embodiments of the disclosure, the third mode is a continuously heating mode, the fourth mode is a discontinuously heating mode.

In some embodiments of the disclosure, the in response to the initial temperature of the cooking cavity being equal to or higher than the first setting temperature and lower than the second setting temperature, determining the heating mode of the first heating device as a fourth mode, comprises: in response to the initial temperature of the cooking cavity is equal to or higher than the first setting temperature and lower than a first preset temperature, determining the heating mode of the first heating device as a first discontinuously heating mode; in response to the initial temperature of the cooking cavity being equal to or higher than the first preset temperature and lower than a second preset temperature, determining the heating mode of the first heating device as a second discontinuously heating mode; and in response to the initial temperature of the cooking cavity being equal to or higher than the second preset temperature and lower than the second setting temperature, determining the heating mode of the first heating device as a third discontinuously heating mode. A Power adjustment ratio of the first discontinuously heating mode, a Power adjustment ratio of the second discontinuously heating mode, and a Power adjustment ratio of the third discontinuously heating mode are different from each other, the first preset temperature and the second preset temperature are between the first setting temperature and the second setting temperature, and the first preset temperature is lower than the second preset temperature.

In some embodiments of the disclosure, the adjusting the output power of the first heating device, further comprises: controlling, during a second time period after the first time period, the first heating device to heat in the third mode.

In some embodiments of the disclosure, the adjusting the output power of the first heating device, further comprises: controlling, during a third time period after the second time period, the first heating device to heat in the fourth mode.

In some embodiments of the disclosure, when the type of a to-be-cooked food is meat, the cooking method further comprises: controlling, during the first time period to the second time period, the fan to operate at a first rotating speed; and controlling, during the third time period, the fan to operate at a second rotating speed, the first rotating speed is greater than the second rotating speed.

In some embodiments of the disclosure, when the type of the to-be-cooked food is vegetable, the cooking method further comprises: controlling, during the first time period to the third time period, the fan to operate at a third rotating speed.

In some embodiments of the disclosure, when the type of a to-be-cooked food is vegetable, the first time period is 1 minutes to 3 minutes, the second time period is 2 minutes to 4 minutes, and the third time period is 1 minutes to 6 minutes; when the type of a to-be-cooked food is meat, the first time period is 1 minutes to 3 minutes, the second time period is 1 minutes to 3utes min, and the third time period is 1 minutes to 6utes min.

In a second aspect, the embodiments of the disclosure provide a control apparatus for a cooking appliance. The cooking appliance is provided with a pot body, a first heating device, a second heating device and a fan. The first heating device is arranged below the pot body and is configured to heat the pot body, the second heating device is arranged above the pot body, the fan is configured to circulate an airflow in the pot body, and the control apparatus comprises: an execution module, configured to acquire, in response to a cooking instruction received from a user, cooking parameters corresponding to a type of to-be-cooked food indicated by the cooking instruction, and control the first heating device, the second heating device, and the fan to operate based on the cooking parameters; the cooking parameters comprise a first heating temperature for the first heating device, a second heating temperature for the second heating device, and a setting duration; and a close module, configured to stop heating when a heating duration is longer than the setting duration.

In a third aspect, the embodiments of the present disclosure provide a cooking appliance. The cooking appliance comprises: a pot body; a first heating device arranged below the pot body and configured to heat the pot body; a second heating device arranged above the pot body; a fan, configured to circulate an airflow in the pot body; a temperature detecting device, configured to acquire a temperature of a cooking cavity; a processor, the first heating device, the second heating device, and the fan are electrically connected with the processor; and a memory, coupled to the processor; the memory stores instructions therein, and the instructions, when being executed by the processor, cause the cooking method mentioned in the first aspect to be implemented.

In a fourth aspect, the embodiments of the present disclosure provide a computer-readable storage medium. The computer-readable storage medium stores therein program codes which, when being executed, cause the cooking method mentioned in the first aspect to be implemented.

### BRIEF DESCRIPTION OF DRAWINGS

In order to more clearly illustrate the technical solutions in the embodiments of the present disclosure, drawings needed to be used in the description of the embodiments are briefly described below. Apparently, the drawings below are just some embodiments of the present disclosure, and other drawings can also be obtained by those skilled in the art based on these drawings without paying any creative effort.
FIG. 1 is a schematic diagram illustrating a structure of a cooking appliance provided by some embodiments of the present disclosure.
FIG. 2 is another schematic diagram illustrating the structure of the cooking appliance provided by some embodiments of the present disclosure.
FIG. 3 is a flowchart illustrating a cooking method provided by some embodiments of the present disclosure.
FIG. 4 is another flowchart illustrating the cooking method provided by some embodiments of the present disclosure.
FIG. 5 is yet another flowchart illustrating the image processing method provided by some embodiments of the present disclosure.
FIG. 6 illustrates a structural block diagram of a cooking appliance provided by some embodiments of the present disclosure.
FIG. 7 illustrates a structural block diagram of a control apparatus of the cooking appliance provided by some embodiments of the present disclosure.
FIG. 8 illustrates a schematic block diagram of a computer-readable storage medium provided by some embodiments of the present disclosure.

Reference numerals: cooking appliance 500, pot body 510, first heating device 520, second heating device 530, fan 540, driving device 541, fan blade 542, temperature detecting device 550, housing 580, base 581, top cover 582, inner receiving cavity 583, reflection cover 584, mounting hole 585, control apparatus 400, execution module 410, close module 420, cooking appliance 900, processor 910, memory 920, computer-readable storage medium 1000.

### DETAILED DESCRIPTION OF EMBODIMENTS

In order to enable those skilled in the art to better understand the technical solutions of the present disclosure, the technical solutions in the embodiments of the present disclosure will be described clearly and comprehensively, in conjunction with the drawings in the embodiments of the present disclosure. It is clear that the described embodiments are only a part, but not all, of embodiments of the present disclosure. Based on the embodiments in the present disclosure, all other embodiments, obtained by those skilled in the art without creative labor, fall within the scope of protection of the present disclosure.

In the present disclosure, unless otherwise specified or limited, terms "installation", "connection", "fixation", etc. should be broadly understood. For example, it may be a fixed connection, a detachable connection, or an integral connection; it may be a mechanical connection or an electrical connection; it may be a direct connection, an indirect connection through an intermediate medium, an internal connection between two components, a connection through only surface contact, or a connection through surface contact by means of an intermediate medium. For those ordinary skilled in the art, the specific meaning of the above terms in the present disclosure may be understood on a case-by-case basis.

In addition, the terms "first", "second", etc. are only used to distinguish descriptions and cannot be understood as specific or special structures. The description of the terms "some embodiments", "other embodiments", etc. refers to that the specific features, structures, materials, or characteristics described in conjunction with the embodiments or examples are comprised in at least some embodiments or examples of the present disclosure. In the present disclosure, the illustrative expressions of the above terms do not necessarily refer to the same embodiments or examples. Moreover, the specific features, structures, materials, or characteristics described may be combined in any one or more embodiments or examples in an appropriate manner. In addition, without conflicting with each other, those skilled in the art can combine the different embodiments or examples, and the features of different embodiments or examples described in the disclosure.

In the related art, the air fryer drives an airflow through a fan located at the top, and the airflow passes through a heating device to generate a hot airflow. The hot airflow can continuously heat food for cooking. When cooking vegetables with the air fryer, the vegetables are usually scorched after cooking, which will greatly affect the taste of the dishes. Therefore, the existing air fryers cannot cook dishes with an effect similar to that of frying vegetables with an open flame. In addition, when cooking meat products such as preserved meat in the air fryer by the hot airflow, it is difficult for the hot airflow to cook the meat products thoroughly, resulting in a poor cooking effect. When the air fryer directly heats the pot body to cook the meat products, it may cause an unstable temperature of the pot body, which may easily cause the bottom of the cooked food to be burnt and some part of the food to be undercooked.

Embodiments of the present disclosure provides a cooking method, a cooking appliance, a control apparatus and a storage medium. In the cooking method, in response to a cooking instruction received from a user, cooking parameters corresponding to a type of to-be-cooked food indicated by the cooking instruction are acquired, and a first heating device, a second heating device, and a fan of the cooking appliance are controlled to operate based on the cooking parameters; and in response to a heating duration being longer than a setting duration, the first heating device and the second heating device are turned off. When cooking food, the first heating device, the second heating device, and the fan are controlled to operate based on the cooking parameters corresponding to the type of the to-be-cooked food, thereby achieving the best cooking effect of the cooked food.

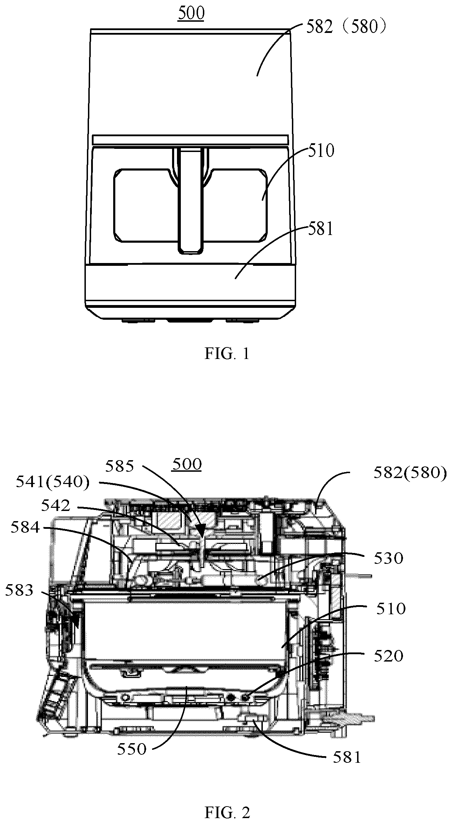

Referring to FIG. 1, some embodiments of the present disclosure provide a cooking appliance 500. The cooking appliance 500 may be an air fryer or the like. The air fryer may evaporate the moisture on the surface of vegetables, meat products, and other foods through high-speed circulation of a hot airflow, thereby achieving the cooking effect of frying without oil or with little oil.

Referring to FIG. 2, the cooking appliance 500 may comprise a pot body 510, a first heating device 520, a second heating device 530, a fan 540, and a temperature detecting device 550. The pot body 510 may be arranged in a housing 580 of the cooking appliance 500, the first heating device 520 is arranged below the pot body 510, and the second heating device 530 is arranged above the pot body 510. The fan 540 may be arranged on a side of the second heating device 530 away from the pot body 510, and the temperature detecting device 550 may be arranged on the surface of the pot body 510.

Specifically, referring to FIG. 2, the housing 580 may comprise a base 581 and a top cover 582. The housing 580 may be made of a metal material, which has good heat dissipation and reduces the impact of internal heat on the components of the housing 580, ensuring the usage safety of the cooking appliance 500. The metal housing has high strength and long service life, ensuring the usage safety of the internal components of the cooking appliance 500 and reducing the impact of external vibrations or shocks.

An inner receiving cavity 583 is defined between the base 581 and the top cover 582. The base 581 and the top cover 582 are detachably connected with each other, which facilitates subsequent replacement of individual parts and reduces maintenance costs. In some embodiments, the housing 580 is further provided with a first opening communicated with the inner receiving cavity 583. The pot body 510 is detachably accommodated in the inner receiving cavity 583, and the first opening is located between the base 581 and the top cover 582. The pot body 510 may be pushed into the inner receiving cavity 583 through the first opening.

The pot body 510 may be used to hold to-be-cooked food. The pot body 510 in the embodiments may be made of non-stick coating material. The surface of the non-stick coating pot body is coated with a layer of artificial coating, which is very smooth and can make the fryer easy to clean and cook, as well as reducing unnecessary use of oil. The pot body 510 may also be made of stainless steel, which has strong anti-rust ability and good corrosion resistance. The pot body 510 made of stainless steel is also durable and easy to clean. The pot body 510 may also be made of an aluminum alloy. The pot body 510 made of aluminum alloy has advantages of lightweight, and good thermal conductivity, which can quickly transfer heat and is suitable for cooking in a short period of time. The pot body 510 may also be made of carbon steel. The pot body 510 made of carbon steel has advantages of high anti-heavy, anti-abrasion, and anti-corrosion, and can adapt to various cooking needs and occasions.

In the embodiments, the pot body 510 may also comprise a frying basket (not shown in the figures), which basket may be an accessory used for baking food inside the cooking appliance 500. The frying basket may be made of a food grade aluminum alloy or other materials, and may have different specifications and shapes to meet different food and baking needs. The bottom of the pot body 510 has a protruding structure, and when the frying basket is placed into the cooking cavity, the bottom of the frying basket may abut against the protruding structure to elevate the frying basket. Afterwards, the to-be-cooked food is placed on the surface of the frying basket facing the fan 540. The frying basket may be used to cook various types of food in the cooking appliance 500, so that the surface of the food is effected by the hot airflow, and the food is cooked to be golden and crispy. Different from the provision of the protruding structure on the bottom wall of the pot body 510, the frying basket may provide a flat placement surface on which the to-be-cooked food can be placed, making it convenient for food placement and avoiding the influence caused by food stacking.

The first heating device 520 may be arranged on the base 581. Furthermore, the first heating device 520 may directly abut against the pot body 510, and thus the first heating device 520 may directly heat the pot body 510. This can improve the efficiency of heat conduction from the first heating device 520 to the pot body 510 in comparison with the way of transferring heat through the airflow, thereby enhancing the heating effect of the first heating device 520.

Referring to FIG. 2, the second heating device 530 is arranged at the top cover 582, and the fan 540 is also arranged at the top cover 582. The fan 540 is arranged on a side of the second heating device 530 away from the pot body 510. The fan 540 is used to circulate the airflow in the pot body 510, so that the airflow may pass through the second heating device 530. The second heating device 530 generates heat when being powered on, and the airflow passing through the second heating device 530 is heated to generate a hot airflow. The hot airflow is driven by fan 540 to circulate in the cooking cavity, which causes the temperature inside the cooking cavity to rise sharply. The to-be-cooked food is thus heated and cooked by the hot airflow until the food is fully cooked.

In some more specific embodiments, referring to FIG. 1 and FIG. 2, the fan 540 may comprise a driving device 541 and a fan blade 542. The driving device 541 is arranged on a side of the top cover 582 away from the pot body 510. The top cover 582 is provided with a reflection cover 584 which may be used to limit the range within which the heating is performed and to guide the airflow. The reflection cover 584 is provided with a mounting hole 585, and the output shaft of the driving device 541 passes through the mounting hole 585. The fan blade 542 may be arranged on the output shaft of the driving device 541 and rotate coaxially with the output shaft. The fan blade 542 is arranged between the second heating device 530 and the reflection cover 584. The fan blade 542 is driven to generate an airflow inside the cooking cavity, for the internal thermal circulation.

In some embodiments, the output shaft of the driving device 541 passes through the mounting hole 585, and the diameter of the output shaft may be slightly smaller than the aperture of the mounting hole 585, so that the output shaft can smoothly pass through the mounting hole 585. This not only ensures smooth rotation of the output shaft in the mounting hole 585, but also prevents heat from escaping out of the mounting hole 585, and thus ensures the energy utilization.

In some embodiments, the mounting hole 585 is provided in the top cover 582 and may be arranged at the center of the top cover 582. For example, the top cover 582 may be circular, and the axis of the mounting hole 585 is coincided with the axis of the top cover 582, so that the output shaft arranged in the mounting hole 585 is at the same distance from each position of the edge of the top cover 582. The top cover 582 may be provided with a large fan blade, thereby increasing the action area of the fan 540, which in turn generating the airflow in a large range.

The driving device 541 in the embodiments may adopt a brushless direct current motor, which is a direct current motor that uses electronic commutation. Compared with traditional alternating current motors, the brushless direct current motor has advantages as follows.

Firstly, the energy efficiency ratio of the brushless direct current motor is higher. Specifically, since there is no need to use a traditional commutator for reverse regulation of current, the brushless direct current motor can be stopped and started in a shorter time, and have lower energy consumption, which enables the higher energy efficiency ratio of the brushless direct current motor. Secondly, the lifespan of the brushless direct current motor is longer. Specifically, since there is no friction material (such as carbon brushes) inside the motor, there is less friction loss during the operation of the motor, so that the lifespan thereof is longer. Furthermore, the noise of the brushless direct current motors is lower. Specifically, due to the less friction generated inside the motor, the motor also has lower noise. Finally, the brushless direct current motor has a wide speed regulation range. Specifically, the speed regulation range of the brushless direct current motor is relatively wide, which can adapt to different loads and working conditions.

It is understandable that, within the normal power range, the rotating speed of driving device 541 is determined by the power of the fan 540. By changing the power of the fan 540, the rotating speed of the fan 540 may be adjusted accordingly, so as to change the flow rate of the airflow inside the pot body 510. Accordingly, the rate of the internal thermal circulation is changed, which changes the cooking effect of the cooking appliance 500.

In some embodiments, both the first heating device 520 and the second heating device 530 may be heating tubes. The heating tubes generate heat when being powered on, so as to promote heat exchange with the passing airflow and thus achieve the circulation of hot airflow.

It can be understood that the first heating device 520 and the second heating device 530 each may be one or more independently selected from a stainless-steel electric heating tube, a quartz electric heating tube, a Teflon electric heating tube, and a titanium electric heating tube. In the embodiments, both the first heating device 520 and the second heating device 530 may use heating elements made of semiconductor materials with a high positive temperature coefficient (PTC). The PTC heating element is a thermosensitive element. Within a certain voltage range, the change in resistivity of the PTC heating element is proportional to temperature. As the temperature rises, the resistance performance of the PTC heating element gradually increases, resulting in an increase in the resistance value of the PTC heating element, thereby achieving a better heating effect.

The temperature detecting device 550 may be a thermistor sensor, a far-infrared thermometer, a thermocouple sensor, etc. The thermistor sensor may be made based on the characteristic that the resistance value changes with temperature, which is convenient and reliable to use, and have been widely used. The far-infrared thermometer is a non-contact temperature measurement device that may perform on-line infrared radiation measurement on the measured object, and it has characteristics of strong anti-electromagnetic interference performance, accurate temperature measurement, high resolution, and fast dynamic response, etc. In the thermocouple sensor, two conductors with different compositions are connected with each other at both ends thereof, to form a circuit. When the temperatures at two connection points are different, an electric potential is generated in the circuit, which may indicate corresponding temperature measurement when the voltage changes. It is understandable that the selection and design of the temperature detecting device 550 may be carried out based on specific implementation scenarios and measurement targets, which is not limited in the embodiments.

The temperature detecting device 550 may be used to acquire the temperature of the cooking cavity of the pot body 510. The installation position may be selected and designed according to the specific type of the temperature detecting device 550. For example, when the temperature detecting device 550 is a far-infrared thermometer, the temperature detecting device 550 may be spaced apart from the pot body 510 and may detect the temperature of the pot body 510 through an infrared radiation signal light. The temperature detecting device 550 can not only avoid its structure from being interfered by high heat, but also ensure the accuracy of temperature detection. When the temperature detecting device 550 is a thermistor sensor, the temperature detecting device 550 may be arranged near the pot body 510. For example, the temperature detecting device 550 may be attached to the bottom of the pot body 510, and the temperature detecting device 550 can directly contact the pot body 510, and the specific temperature of the pot body 510 may be detected through the change of the internal resistance value of the temperature detecting device 550. The temperature of the pot body 510 may be obtained through the temperature detecting device 550, so that other devices or the cooking appliance 500 may use the temperature measurement results of the temperature detecting device 550 to adjust the heating parameters.

Referring to FIG 2, the cooking appliance 500 further comprises a control panel (not shown in the figure) which may be electrically connected with the fan 540, the first heating device 520, and the second heating device 530. The control panel may be used to receive the user's control instruction, and then enable the processor electrically connected with the control panel to control the fan 540, the first heating device 520, and the second heating device 530 according to the control instruction. For example, the processor may control the on/off state, the rotating speed, etc. of the fan 540, and the processor may control the on/off state, the output power, etc. of each of the first heating device 520 and the second heating device 530. In this way, the cooking appliance 500 may have more choices of baking modes and baking degrees, thereby improving the baking effect of the cooking appliance 500.

In some embodiments, the control panel may further comprise a display screen, a timer, etc. The display screen may be used to display the working status, internal temperature, and working times of each component of the cooking appliance 500. The display screen may be a touch screen, and the user may manipulate the display screen to change the working status of the cooking appliance 500, etc. The timer is used to record the working time of each component of the cooking appliance 500.

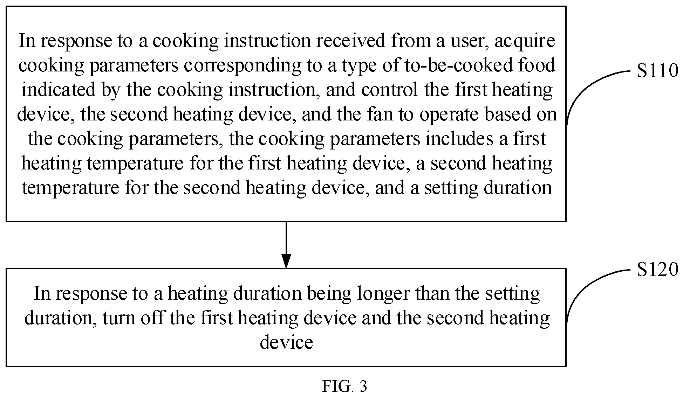

The embodiments further provide a cooking method that may be applied to the aforementioned cooking appliance 500. Referring to FIG. 3, the cooking method comprises the S110 to S120 as follows.

S110, in response to a cooking instruction received from a user, cooking parameters corresponding to a type of to-be-cooked food indicated by the cooking instruction are acquired, and the first heating device, the second heating device, and the fan are controlled to operate based on the cooking parameters, the cooking parameters comprises a first heating temperature for the first heating device, a second heating temperature for the second heating device, and a setting duration.

The first heating temperature is a temperature for the bottom wall of the pot body, and the second heating temperature is a temperature for the cooking cavity of the cooking appliance.

In some embodiments, the cooking appliance may have stored multiple preset programs in advance, each preset program may be used for processing specific food, such as a preset program for processing vegetables such as potatoes and green vegetables, and a preset program for processing meat products such as preserved meat and beef. Each preset program comprises corresponding parameters such as a heating duration, a first heating temperature and a second heating temperature. When the user selects a preset program as the cooking instruction, the corresponding cooking parameters may be determined by calling the parameters set in the preset program. It can be understood that the user may also adjust the heating duration preset in the preset program. In some embodiments, the type of the to-be-cooked food and the setting duration are set by the user on the control panel, the cooking appliance 500 determines the cooking instruction based on the type of the to-be-cooked food and the setting duration that are input by the user on the control panel, and the first heating temperature and the second heating temperature corresponding to the type of to-be-cooked food are preset in the cooking appliance 500.

In response to the received cooking instruction, the various components of the cooking appliance 500 are controlled to operate based on the cooking instruction. Specifically, the cooking appliance may control the first heating device to be powered on and a time duration during which the first heating device works is timed synchronously perform timing to acquire a first working duration. The cooking appliance may also control the second heating device to be powered on and a time duration during which the second heating device works is timed to acquire a second working duration. Moreover, by comparing the first working duration and second working duration with the setting duration, the working statuses of the first heating device and the second heating device may be determined, and the first heating device and the second heating device may be accordingly controlled. The cooking appliance may control the fan to operate based on operating parameters. The operating parameters may comprise rotating direction, rotating speed, operating duration, and other parameters. For example, the fan may be used in conjunction with the second heating device, and the cooking appliance may determine values of the operating parameters of the fan in different periods, based on the working status of the second heating device. When the second heating device starts working, the fan may start running based on the operating parameters until the second heating device stops heating.

In some embodiments, the cooking appliance may further comprise a preheating program. In a case where the user selects the preheating program, the first heating device, the second heating device, and the fan may perform the preheating operation based on corresponding working parameters of the preheating program when the preheating program is executed. Alternatively, the cooking appliance may perform the preheating program from the moment at which the user installs the pot body in place. The preheating program may be used to determine whether the cooking appliance can work properly.

The cooking parameters corresponding to the type of to-be-cooked food as indicated by the cooking instruction comprise the first heating temperature for the first heating device, the second heating temperature for the second heating device, and the setting duration. The first heating temperature is a setting temperature for the first heating device, and the first heating device may perform the heating based on the first heating temperature. The second heating temperature is a setting temperature for the second heating device, and the second heating device may perform the heating based on the second heating temperature.

When cooking vegetables, the cooking appliance 500 sets the first heating temperature to be higher than the second heating temperature. That is to say, when the type of to-be-cooked food is vegetable, acquiring the cooking parameters corresponding to the type of to-be-cooked food indicated by the cooking instruction comprises: setting the first heating temperature to be higher than the second heating temperature. In this way, the temperature of the hot airflow inside the cooking cavity may be reduced, thereby reducing the cooking effect of the hot airflow on the vegetable; meanwhile, the cooking effect of the first heating device on the vegetable is improved to ensure that the vegetable is cooked thoroughly. For example, when the to-be-cooked food is water spinach, based on factors, such as the heat transfer efficiency and cooking effect, of the first heating device and the second heating device, the first heating temperature may be determined to be 130°C to 150°C, preferably 140°C, and the second heating temperature may be 110°C to 130°C, preferably 120°C, with a temperature difference between the first heating temperature and the second heating temperature being 0°C to 40°C, preferably 20°C. The second heating temperature for the second heating device is lower than the first heating temperature for the first heating device, so that the temperature of the hot airflow in the cooking cavity is reduced, thereby reducing the cooking effect of the hot airflow on the vegetable, which can avoid the rapid drying of the moisture of the vegetable. Therefore, compared with the way that the second heating device enables thermal circulation through air, the direct heat conduction of the first heating device enables less heat loss and has a better heat conduction effect. The higher first heating temperature for the first heating device improves the cooking effect of the first heating device, and ensures that the vegetable can be cooked thoroughly.

When cooking meat products, the cooking appliance 500 sets the first heating temperature to be lower than the second heating temperature. That is to say, when the type of to-be-cooked food is meat, acquiring the cooking parameters corresponding to the type of to-be-cooked food indicated by the cooking instruction comprises: setting the first heating temperature to be lower than the second heating temperature. Because the first heating device may directly heat the pot body and the second heating device heats the food inside the pot body by heating the airflow, the thermal conductivity rate of the first heating device is better than that of the second heating device. By setting the first heating temperature to be lower than the second heating temperature, it is possible to prevent the heating effect of the first heating device from far exceeding that of the second heating device, and thus can prevent a too rapid heating effect of the first heating device which would otherwise cause the food to be burnt. The heating effect of the first heating device and the heating effect of the second heating device may be balanced by configuring a temperature difference, which can not only avoid phenomena that the food is burnt for example, but also ensure that the meat products are cooked thoroughly. For example, when the to-be-cooked food is preserved meat, based on factors, such as the heat transfer efficiency and cooking effect, of the first heating device and the second heating device, the first heating temperature may be determined to be 130°C to 170°C, preferably 150°C; the second heating temperature may be 160°C to 200°C, preferably 180°C, and the first heating temperature is 20°C to 40°C, preferably 30°C, lower than the second heating temperature. Compared with the way that second heating device transfers heat through air, the direct heat conduction of the first heating device enables less heat loss and has a better heat conduction effect. By configuring a temperature difference between the first heating temperature and the second heating temperature, the heat difference between the upper and lower parts of the pot body can be kept within a setting range, which can not only avoid phenomena that the food is burnt for example, but also ensure a uniform heating effect of the to-be-cooked food.

It should be noted that, in the various embodiments of the present disclosure, when the type of to-be-cooked food is vegetable, it means that the volume of vegetables accounts for more than 50% of the total volume of the to-be-cooked food. For example, the to-be-cooked food with the type of vegetable may be a dish in which the volume of vegetables accounts for 60%, 80%, or 100% of the total volume. When the type of to-be-cooked food is meat product, it means that the volume of meat accounts for more than 50% of the total volume of the to-be-cooked food. For example, the to-be-cooked food with the type of meat product may be a dish in which the volume of meat accounts for 60%, 80%, or 100% of the total volume. The values in these examples are only illustrative and may also be other values that meet the volume requirements mentioned above.

The setting duration may be an operating time during which the cooking appliance operates, and the operating time may be changed by adjusting moments at which the first heating device, the second heating device, and the fan are powered on and moments at which the three are powered off. Alternatively, the setting duration may be a heating duration of the first heating device and/or the second heating device. The specific parameters, such as the setting duration, the first heating temperature, and the second heating temperature, in the preset program of the cooking appliance are not fixed, and need to be differentiated according to the configuration parameters of each cooking appliance, which is not limited in the embodiments.

It can be understood that the cooking parameters further comprise specific operating periods and operating parameters of the first heating device, the second heating device, and the fan during the operation of the cooking appliance, which is not limited in the embodiments and they may be adjusted as required.

S120, in response to a heating duration being longer than the setting duration, the first heating device and the second heating device are turned off.

The heating duration is timed from the moment at which the first heating device and/or the second heating device start working, and may be compared with the setting duration. When the heating duration is longer than the setting duration, the first heating device and second heating device are powered off, that is, the heating process is completed, thereby preventing the appliance from further heating, so as to ensure the cooking effect of the to-be-cooked food and prevent overcooking thereof.

In other embodiments, when the heating duration is longer than the setting duration, the cooking appliance may inform the user of the end of this work through sound or visual prompts, thereby reminding the user to take corresponding measures.

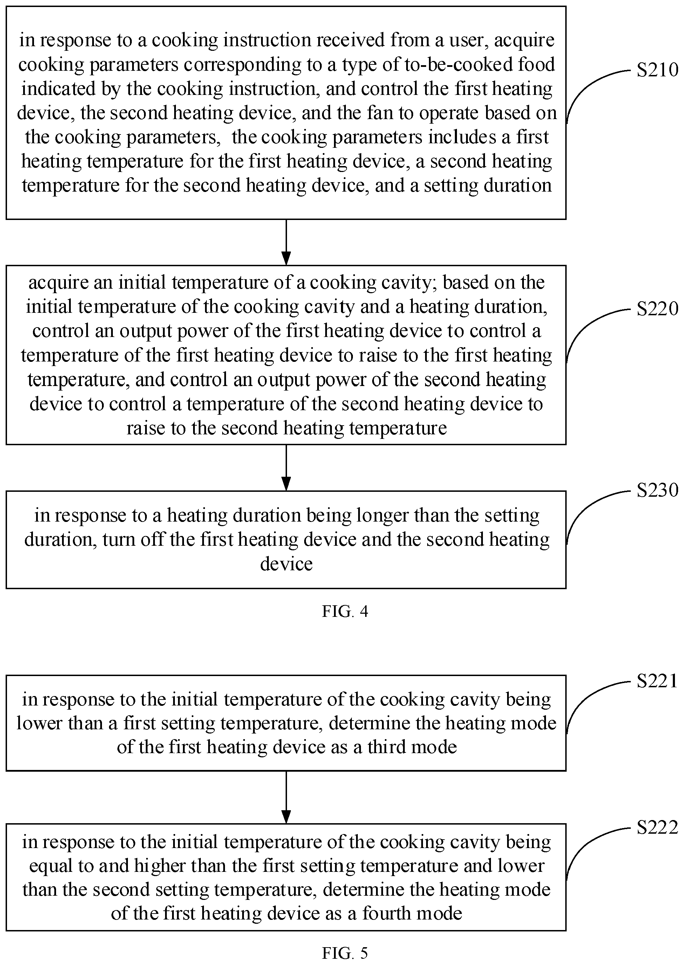

Based on the above cooking method, the embodiments of the present disclosure provides another cooking method. Referring to FIG. 4, the cooking method provided in the embodiments may further comprise S210 to S230 as follows. It should be understood that the cooking method of these embodiments has the same or corresponding implementation steps as the above embodiments, and the specific explanation of these same or corresponding implementation steps may refer to the content provided in the above embodiments, which will not be repeated in these embodiments.

S210, in response to a cooking instruction received from a user, cooking parameters corresponding to a type of to-be-cooked food indicated by the cooking instruction are acquired, and the first heating device, the second heating device, and the fan are controlled to operate based on the cooking parameters; the cooking parameter comprises a first heating temperature for the first heating device, a second heating temperature for the second heating device, and a setting duration.

S220, an initial temperature of a cooking cavity is acquired; based on the initial temperature of the cooking cavity and a heating duration, an output power of the first heating device is controlled to control a temperature of the first heating device to raise to the first heating temperature, and an output power of the second heating device is controlled to control a temperature of the second heating device to raise to the second heating temperature.

The temperature of the cooking cavity may be obtained through the temperature detecting device. Specifically, the temperature detecting device may transmit temperature information, and a current temperature value of the cooking cavity may be acquired based on the temperature information. The temperature value acquired in real-time may be used to control the first heating device and the second heating device of the cooking appliance, and the control parameters comprise, but are not limited to, output power value, heating duration, etc.

In some embodiments, the controlling the output power of the second heating device comprises: in response to the type of the to-be-cooked food is vegetable, the second heating device is controlled, based on the initial temperature of the cooking cavity and the heating duration, to operate in a first mode to adjust the output power of the second heating device; in response to the type of the to-be-cooked food is meat, the second heating device is controlled, based on the initial temperature of the cooking cavity and the heating duration, to heat in a second mode, to raise the temperature of the of the second heating device to the second heating temperature. The first mode may be a discontinuously heating mode, and the second mode may be a continuously heating mode.

First, it is illustrated by taking a case where the type of to-be-cooked food is vegetable as an example. Based on the initial temperature of the cooking cavity and heating duration, the cooking appliance adjusts the output power of the second heating device, to control the temperature of the second heating device to raise to the second heating temperature. The heating temperature of the second heating device may be detected in real time. When the temperature value of the second heating device is detected to be equal to the second heating temperature without significant fluctuation, the output power of the second heating device may be maintained. In some embodiments, when heating vegetables, such as green vegetables and water spinach, the second heating device may be controlled to rise its temperature to the second heating temperature. Specifically, based on the cooking instruction which may comprise heating power, heating temperature, heating duration and other parameters corresponding to different types of vegetables, the second heating device is controlled to operate in the first mode to adjust the output power of the second heating device. The first mode may be for example a discontinuously heating mode in which the second heating device heats in some time periods and stops heating in the rest of time periods, thereby reducing the cooking effect of the second heating device, reducing the cooking effect of hot airflow on the vegetables, and avoiding the rapid drying of the moisture of the vegetables. For example, in the heating cycles of the second heating device each cycle comprising for example 32 seconds, the second heating device in the first mode is turned on for 20 seconds and turned off for 12 seconds in each cycle. Understandably, in the first mode, the power of the second heating device may also be controlled to change periodically, which is selected and designed according to the parameters of the second heating device and the second heating temperature.

Further, it is illustrated by taking a case where the type of to-be-cooked food is meat as an example. The second heating device is controlled to operate in the second mode, to control the temperature of the second heating device to raise to the second heating temperature. The cooking appliance controls the output power of the second heating device, to control the temperature of the second heating device to raise to the second heating temperature. The heating temperature of the second heating device may be detected in real time. When the temperature value of the second heating device is detected to be equal to the second heating temperature without significant fluctuations, the output power of the second heating device is maintained. The second mode may be a continuously heating mode or a discontinuously heating mode. Specifically, the second heating device in the second mode may continuously heat, and the parameters such as specific output power, voltage, and current of the second heating device in the second mode may be obtained based on the second heating temperature, so that the second heating device can successfully implement the heating effect in the second mode. Understandably, in the second mode, the power of the second heating device may also be controlled to change periodically, which is selected and designed according to the parameters of the second heating device and the second heating temperature.

It is understandable that the temperature value of the second heating device is positively correlated with its power. The output power of the second heating device may be adjusted appropriately, to enable the second heating device to reach the second heating temperature and be stabilized at the second heating temperature.

By controlling the output power of the first heating device, the temperature of the first heating device is controlled to raise to the first heating temperature. The temperature of the first heating device may be detected in real time. When the temperature of the first heating device is raised to the first heating temperature without significant fluctuations, the output power of the first heating device may be maintained.

It can be understood that the temperature value of the first heating device is positively correlated with the power. The output power of the first heating device may be adjusted appropriately, to enable the first heating device to reach the first heating temperature and be stabilized at the first heating temperature.

During the cooking time, due to the large amount of meals and frequent use of the cooking appliance, it would be common that the pot body needs to cook for the next time before being cooling down completely. When using the cooking appliance for the next cooking, there is residual heat in the pot body and the cooking cavity, and the initial temperature of the cooking cavity is too high. If it is cooked with the same heating method, the temperature of the cooking cavity may rise sharply, which may easily cause the temperature of the cooking cavity to exceed the setting range, and it may also cause situations for example the food is burnt, which seriously affects the user's meal and poses certain risks. In the embodiments, the first heating device may adjust the output power according to the initial temperature of the cooking cavity and the heating duration. The initial temperature of the cooking cavity here is based on the temperature value at the beginning of cooking by the cooking appliance. The first heating device may adjust the output power based on the temperature value of the cooking cavity, to adapt to different initial temperatures of the cooking cavity. For example, when the initial temperature of the cooking cavity is high, the output power of the first heating device is reduced to slow down the heating rate of the first heating device. This can not only avoid the food from being burnt that would otherwise be caused due to a fast heating rate, but also ensure that the second heating device can match the first heating device.

In a more specific implementation, during a first time period, the heating mode of the first heating device is determined based on the initial temperature of the cooking cavity, and the output power of the first heating device is adjusted based on the determined heating mode. The heating mode may be a third mode or a fourth mode. The duration of the first time period is less than the setting duration, and the first time period may be, for example, a time period from the start of cooking by the cooking appliance to a certain setting time point. The third mode may be a continuously heating mode, and the fourth mode may be a discontinuously heating mode. For example, the first heating device in the third mode may carry out continuous heating, and in the third mode, the cooking appliance may obtain the specific output power, voltage, current and other parameters of the first heating device based on the first heating temperature, so that the first heating device can successfully implement the heating effect according to the specific parameters.

Understandably, in the fourth mode, the power of the first heating device may also be controlled to change periodically, which is specifically selected and designed based on the parameters of the first heating device and the first heating temperature.

In more specific embodiments, referring to FIG. 5, the determining, based on the initial temperature of the cooking cavity, the heating mode of the first heating device may further comprise S221 to S222.

S221, in response to the initial temperature of the cooking cavity being lower than a first setting temperature, the heating mode of the first heating device is determined as the third mode.

The first setting temperature may be pre-stored in the cooking appliance, or manually input into the cooking appliance. The user may choose to use the pre-stored parameter or input the parameter manually, based on the specific to-be-cooked food. The first setting temperature may be configured as, for example, 45°C to 55°C, preferably 50°C.

When the initial temperature of the cooking cavity is lower than the first setting temperature, it is determined that the first heating device heats in the third mode. Due to the initial temperature of the cooking cavity being lower than the first setting temperature, the initial temperature of the cooking cavity is relatively low, which will not affect the cooking effect. In addition, in order to ensure the heating effect of the first heating device, the first heating device may be determined to heat in the third mode, i.e., the continuously heating mode, that is, the first heating device may continuously heat the to-be-cooked food in the pot body. Based on the initial temperature of the cooking cavity, the heating effect of the cooking cavity is ensured and the risk of burning the food is also reduced.

S222, in response to the initial temperature of the cooking cavity being equal to and higher than the first setting temperature and lower than a second setting temperature, the heating mode of the first heating device is determined as a fourth mode.

The second setting temperature may be pre-stored in the cooking appliance, or manually input into the cooking appliance. The user may choose to use the pre-stored parameter or input the parameter manually, based on the specific to-be-cooked food. The second setting temperature may be configured to be above 100°C.

When the initial temperature of the cooking cavity is higher than the first setting temperature and lower than the second setting temperature, the first heating device is determined to heat in the fourth mode. Due to the initial temperature of the cooking cavity being higher than the first setting temperature, the initial temperature of the cooking cavity is relatively high, which may have an impact on the cooking effect. To avoid a situation, such as burnt food or uneven heating, that would be caused due to too quick raise of the temperatures of the cooking cavity and pot body, the first heating device may be determined to heat in the fourth mode, that is, the first heating device is determined to heat the to-be-cooked food in the pot body in the discontinuously heating mode. Based on the initial temperature of the cooking cavity, the risk of burning the food is reduced, and the heating effect of the food is ensured.

More specifically, the cooking parameters of the embodiments further comprise a first discontinuously heating mode, a second discontinuously heating mode, a third discontinuously heating mode, a first preset temperature, and a second preset temperature. The power adjustment ratios of the first discontinuously heating mode, the second discontinuously heating mode, and the third discontinuously heating mode are different, in which the power adjustment ratio means a proportion of the actual heating duration in each whole heating cycle. The first preset temperature and the second preset temperature are not equal to each other. The first preset temperature and the second preset temperature may also be pre-stored in the cooking appliance or manually input into the cooking appliance. The first preset temperature and the second preset temperature are located between the first setting temperature and the second setting temperature. That is to say, the fourth mode mentioned above comprises the first discontinuously heating mode, the second discontinuously heating mode, and the third discontinuously heating mode with different power modulation ratios.

When the initial temperature of the cooking cavity is equal to or higher than the first setting temperature and lower than the first preset temperature, the first heating device is determined to heat in the first discontinuously heating mode. The first preset temperature may be 75°C to 85°C, preferably 80°C. A temperature higher than the first setting temperature indicates that the remaining heat in the cooking cavity and pot body would affect the heating, but a temperature lower than the first preset temperature indicates that the affection of remaining heat would not be significant. Compared with continuous heating, the heating rate of the first discontinuously heating mode is lower, which can effectively avoid the heating effect from being improved too rapidly. Compared with the second discontinuously heating mode and third discontinuously heating mode, the first discontinuously heating mode has a more significant heating effect and can maintain a certain heating rate. For example, taking 32 seconds as one cycle, in the first discontinuously heating mode, the first heating device is turned on for 20 seconds and turned off for 12 seconds in each cycle. The first time period comprises multiple consecutive cycles, which enables discontinuous heating of the first heating device, thereby ensuring the heating effect of the cooking appliance.

When the initial temperature is equal to or higher than the first preset temperature and lower than the second preset temperature, the first heating device is determined to heat in the second discontinuously heating mode. The second preset temperature may be 95°C to 105°C, preferably 100°C. Relatively speaking, a temperature higher than the first preset temperature indicates that the remaining heat in the cooking cavity and pot body would have a greater impact on the heating effect. The interval between heating time periods in the second discontinuously heating mode may be further increased. Compared with the first discontinuously heating mode, the second discontinuously heating mode has a lower heating rate, and a slower rise rate of temperature, which can effectively avoid the heating effect from being improved too rapidly. For example, taking 32 seconds as one cycle, in the second discontinuously heating mode, the first heating device is turned on for 16 seconds and turned off for 16 seconds in each cycle. The first time period comprises multiple consecutive cycles, and the interval between heating time periods is further increased to slow down the rise rate of temperature.

When the initial temperature is equal to or higher than the second preset temperature and lower than the second setting temperature, the first heating device is determined to heat in the third discontinuously heating mode. Compared with the above two situations, a temperature higher than the second preset temperature indicates that the remaining heat in the cooking cavity and pot body would have a much greater impact on the heating effect. The interval between heating time periods in the third discontinuously heating mode may be further increased. The heating rate of the third discontinuously heating mode is extremely low, and the rise rate of temperature is further slowed down, which can effectively slow down the heating rate. For example, taking 32 seconds as one cycle, in the third discontinuously heating mode, the first heating device is turned on for 10 seconds and turned off for 22 seconds in each cycle. The first time period comprises multiple consecutive cycles, and the interval between heating time periods is further increased to slow down the rise rate of temperature.

Different heating modes may be selected based on the different initial temperature of the pot body. The heating parameters of the first heating device are adjusted in different heating modes to achieve different heating effects, which further enhances the diversity of cooking modes for the cooking appliance.

To improve the cooking effect of the cooking appliance and enhance the taste of food after cooking, the embodiments further comprises steps as follows.

During a second time period after the first time period, the first heating device is controlled to heat in the third mode. During the second time period, the pot body is fully heated, and the second heating device may also generate sufficient hot airflow for circulation, and the first heating device and the second heating device may cooperate with each other for heating. To further improve the heating effect, the vegetables or meat products are heated at a maximum extent, to shorten the cooking time and produce a stir frying effect.

During a third time period after the second time period, the first heating device is controlled to heat in the fourth mode. The third time period is a supplementary cooking time to further ensure sufficient cooking time and improve the cooking effect of the vegetables or meat products. To avoid overcooking, the heating degree for cooking is reduced in the third time period compared with those in the first and second time periods. In addition, to avoid situations such as burnt food, the first heating device is controlled to heat in the fourth mode, that is, the first heating device heat intermittently to avoid overcooking from being caused by high temperature of the pot body.

For the case where the type of to-be-cooked food is meat product, the heating efficiency of the second heating device is higher during the first time period and the second time period. Correspondingly, the heat transfer efficiency of the airflow needs to be higher, and the rotating speed of the fan may be configured to be higher, thereby improving the thermal circulation effect inside the pot body. The fan may be controlled to operate at a first rotating speed, and the first rotating speed is for example 1200r/min to 1500r/min. The hot airflow may flow faster through the meat, thereby improving the heating effect of the second heating device. During the third time period, the heating efficiency of the second heating device is decreased to a certain extent. The heat transfer efficiency of the airflow needs to be reduced, and the rotating speed of the fan may be relatively decreased; in this case, the fan is controlled to operate at a second rotating speed, where the first rotating speed is greater than the second rotating speed. For example, the second rotating speed is 1000r/min to 1200r/min. The hot airflow can flow slowly to the to-be-cooked food, which slows down the heating rate of the second heating device.

For the case where the type of the to-be-cooked foods is vegetable, the heating efficiency of the second heating device is relatively reduced compared with the case where the type of to-be-cooked food is meat, during the first time period to the third time period. Correspondingly, the heat transfer efficiency of the airflow needs to be reduced. In this case, the fan may be controlled to operate at a third rotating speed, such as 800r/min to 1000r/min, to ensure that the hot airflow can flow, at a relatively slow speed, through the to-be-cooked food.

In some embodiments, when the type of to-be-cooked food is vegetable, the first time period is 1 minute to 3 minutes, the second time period is 2 minutes to 4 minutes, and the third time period is 1 minute to 6 minutes. When the type of to-be-cooked food is meat, the first time period is 1 minute to 3 minutes, the second time period is 1 minute to 3 minutes, and the third time period is 1 minute to 6 minutes. The duration of the time periods may be selected based on the specific implementation object and the working status of the cooking appliance. For example, when the to-be-cooked food is water spinach or cabbage, based on the results of many tests, the first time period may be configured as 1 minute, the second time period may be configured as 3 minutes, and the third time period may be configured as 1 minute. When the to-be-cooked food is shredded pork with vegetables, according to results of many tests, the first time period may be configured as 2 minutes, the second time period may be configured as 2 minutes, and the third time period may be configured as 1 minute. Alternatively, when the to-be-cooked food is preserved meat, based on the results of multiple test, the first time period may be configured as 2 minutes, the second time period may be configured as 1 minute, and the third time period may be configured as 1 minute. According to the different types of to-be-cooked food, for example the water spinach requires a certain crispy texture, the second time period needs to be set shorter, thereby reducing the intense cooking time to enhance the taste; for another example, to enhance the crispness of the pork belly and reduce the oil content of the pork belly, the intense cooking time during the second time period is increased to improve the taste.

S230, in response to the heating duration being longer than the setting duration, the first heating device and the second heating device are turned off.

The embodiments of the present disclosure provide the cooking method and the cooking appliance, in which the first heating device and the second heating device are controlled to heat according to the user's control instruction. When cooking vegetables, the heating temperatures of both the first heating device and the second heating device are controlled in such a manner that the first heating temperature of the first heating device is higher than the second heating temperature of the second heating device. As such, the temperature of the hot airflow inside the cooking cavity is reduced, thereby reducing the cooking effect of the hot airflow on the vegetables and avoiding the moisture of the vegetables from being dried quickly. In addition, the cooking effect of the first heating device is improved to ensure that the vegetables are cooked thoroughly. This setting can ensure the crisp taste of the vegetables, improve the cooking effect of the vegetables, and ensure that the vegetables are cooked thoroughly. When cooking meat products, the heating temperatures of both the first heating device and the second heating device are controlled in such a manner that the first heating temperature of the first heating device is lower than the second heating temperature of the second heating device. The cooking effect of the first heating device on the meat products is reduced, thereby avoiding the food from being burnt that would be otherwise be caused by rapid heating the pot body. Due to the different heat transfer efficiencies of the two heating devices, the first heating device and second heating device are enabled to cooperate with each other by controlling the temperature difference therebetween, so as to ensure that the meat product is cooked thoroughly.

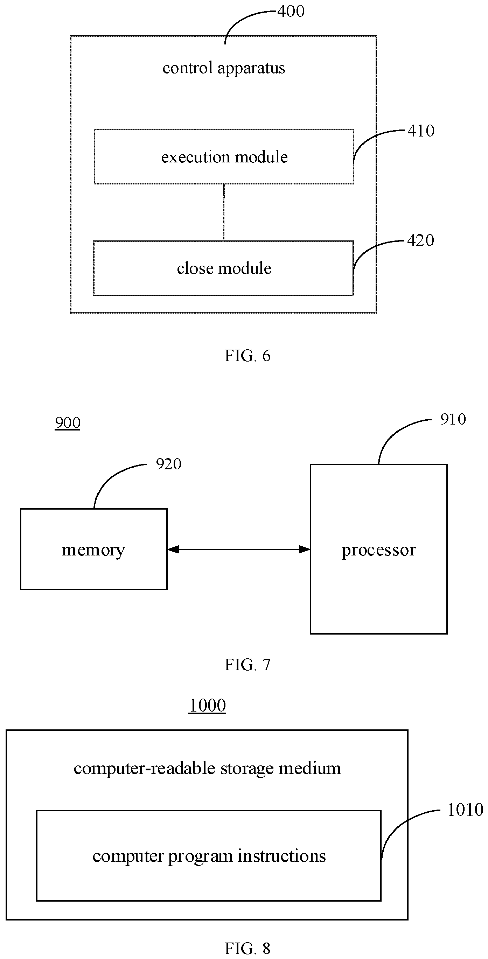

Referring to FIG. 6, some embodiments of the present disclosure provide a control apparatus 400 for a cooking appliance. The cooking appliance may comprise a pot body, a first heating device, a second heating device, a fan, and a temperature detecting device. The pot body is arranged in the housing of the cooking appliance, and the first heating device is arranged below the pot body. The first heating device may heat the pot body, and the heat may be transferred, through the pot body, to the to-be-cooked food inside the pot body, so that the food (such as vegetables, and meat products) can be cooked thoroughly. The second heating device is arranged above the pot body. The fan is configured to circulate an airflow in the pot body, and the fan may be arranged on the side of the second heating device away from the pot body. The fan is configured to drive the airflow, and the second heating device is configured to heat the airflow to form a hot airflow which may act on the food inside the pot body. The temperature detecting device may be provided on the surface of the pot body, and be configured to acquire the temperature of the cooking cavity. In some specific embodiments, the control apparatus 400 comprises an execution module 410 and a close module 420.

The execution module 410 is used to acquire, in response to a cooking instruction received from a user, cooking parameters corresponding to the type of to-be-cooked food indicated by the cooking instruction, and control the first heating device, the second heating device, and the fan to operate based on the cooking parameter; the cooking parameter comprises a first heating temperature for the first heating device, a second heating temperature for the second heating device, and a setting duration.

The close module 420 is used to close the first heating device and the second heating device when a heating duration is longer than the setting duration.

In summary, the control apparatus 400 of the cooking appliance provided in the present embodiments controls the heating of the first heating device and the second heating device based on the user's control instruction. When cooking vegetables, the heating temperatures of both the first heating device and the second heating device are controlled in such a manner that the first heating temperature of the first heating device is higher than the second heating temperature of the second heating device. As such, the temperature of the hot airflow inside the cooking cavity is reduced, thereby reducing the cooking effect of the hot airflow on the vegetables and avoiding the moisture of the vegetables from being dried quickly. In addition, the cooking effect of the first heating device is improved to ensure that the vegetables are cooked thoroughly. This setting can ensure the crisp taste of the vegetables, improve the cooking effect of the vegetables, and ensure that the vegetables are cooked thoroughly. When cooking meat products, the heating temperatures of both the first heating device and the second heating device are controlled in such a manner that the first heating temperature of the first heating device is lower than the second heating temperature of the second heating device. The cooking effect of the first heating device on the meat products is reduced, thereby avoiding the food from being burnt that would be otherwise be caused by rapid heating the pot body. Due to the different heat transfer efficiencies of the two heating devices, the first heating device and second heating device are enabled to cooperate with each other by controlling the temperature difference therebetween, so as to ensure that the meat product is cooked thoroughly.

Those skilled in the art can clearly understand that the specific working process of the apparatus and modules described above may refer to the corresponding process in the foregoing method embodiments, which will not be repeated here, for the convenience and simplicity of description.

In the several embodiments provided in the present disclosure, the coupling between modules may be electrical, mechanical, or in other forms.

In addition, the functional modules in various embodiments of the present disclosure may be integrated into one processing module, or each module may exist alone physically, or two or more modules may be integrated into one module. The integrated module mentioned above may be implemented in hardware or software functional modules.

Referring to FIG. 7, some embodiments of the present disclosure further provides a cooking appliance 900. The cooking appliance 900 may be an air fryer equipped with a first heating device and a second heating device. The cooking appliance 900 also comprises a processor 910 and a memory 920. The memory 920 stores computer program instructions.

The processor 910 may comprise one or more processing cores. The processor 910 uses various interfaces and lines to connect various parts within the entire cooking appliance, and implements various functions of the cooking appliance and processes data by running or executing instructions, programs, code sets or instruction sets, and calling data stored in memory 920. In some implementations, the processor 910 may be implemented as at least one hardware form of Digital Signal Processing (DSP), Field-Programmable Gate Array (FPGA) or Programmable Logic Array (PLA). The processor 910 may integrate one or a combination of Central Processing Unit (CPU), Graphics Processing Unit (GPU), and a modem. The CPU mainly handles the operating system, user interface and applications, etc. The GPU is responsible for rendering and drawing the display contents. The modem is used to handle wireless communication. It can be understood that the above modem may also be implemented through a separate communication chip, without being integrated into the processor 910.

The memory 920 may comprise Random Access Memory (RAM) or Read-Only Memory (RAM). The memory 920 may be configured to store instructions, programs, codes, code sets, or instruction sets. The memory 920 may comprise a program storing region and a data storing region. The program storing region may store instructions for implementing an operating system, instructions for implementing at least one function (e.g., a touch function, a sound playback function), instructions for implementing the various method embodiments, etc. The data storing region may store data created by the cooking appliance during use, etc.

Referring to FIG. 8, some embodiments of the present disclosure provide a structural diagram of a computer-readable storage medium. The computer-readable storage medium 1000 stores program codes therein. The program codes are capable of being invoked by a processor to implement the cooking method described in the method embodiments above. The computer-readable storage medium 1000 may be an electronic memory such as a flash memory, an EEPROM (Electrically Erasable Programmable Read-Only Memory), an EPROM, a hard disk, or a ROM. In some implementations, the computer-readable storage medium 1000 comprises a non-transitory computer-readable storage medium. The computer-readable storage medium 1000 has a storage space for program codes 1010 that implement any of the method steps of the methods described above. The program codes may be read from or written into one or more computer program products. The program codes 1010 may, for example, be compressed in an appropriate form.

The above embodiments are only used to illustrate the technical solutions of the present disclosure, rather than limiting the present disclosure. Despite the present disclosure has been described in detail with reference to the foregoing embodiments, those skilled in the art that should understand that they may still make modifications to the technical solutions described in the foregoing embodiments, or make equivalent replacements to some technical features thereof; and such modifications or replacements do not make the essence of the corresponding technical solutions depart from the spirit and scope of the technical solutions of the various embodiments of the present disclosure, and should be comprised in the scope of protection of the present disclosure

## Claims

1. A cooking method, applied to a cooking appliance (500, 900), wherein the cooking appliance (500, 900) is provided with a pot body (510), a first heating device (520), a second heating device (530) and a fan (540), the first heating device (520) is arranged below the pot body (510) and is configured to heat the pot body (510), the second heating device (530) is arranged above the pot body (510), and the fan (540) is configured to circulate an airflow in the pot body (510); and the cooking method comprises:
(5110, 5210) in response to a cooking instruction received from a user, acquiring cooking parameters corresponding to a type of to-be-cooked food indicated by the cooking instruction, and controlling the first heating device (520), the second heating device (530), and the fan (540) to operate based on the cooking parameters, wherein the cooking parameters comprise a first heating temperature for the first heating device (520), a second heating temperature for the second heating device (530), and a setting duration; and
(5120, 5230) in response to a heating duration being longer than the setting duration, turning off the first heating device (520) and the second heating device (530).

2. The cooking method as claimed in claim 1, wherein the first heating temperature is a temperature for a bottom wall of the pot body (510), and the second heating temperature is a temperature for a cooking cavity of the cooking appliance (500, 900); and
when the type of the to-be-cooked food is vegetable, the first heating temperature is higher than the second heating temperature; and
when the type of the to-be-cooked food is meat, the first heating temperature is lower than the second heating temperature.

3. The cooking method as claimed in claim 2, wherein the cooking appliance (500, 900) is further provided with a temperature detecting device (550) configured to acquire a temperature of the cooking cavity of the cooking appliance (500, 900), and the controlling the first heating device (520), the second heating device (530), and the fan (540) to operate based on the cooking parameters, comprises:
acquiring an initial temperature of the cooking cavity; and
adjusting, based on the initial temperature of the cooking cavity and the heating duration, an output power of the first heating device (520) to control a temperature of the first heating device (520) to raise to the first heating temperature.

4. The cooking method as claimed in claim 3, wherein when the type of the to-be-cooked food is vegetable, the controlling the first heating device (520), the second heating device (530), and the fan (540) to operate based on the cooking parameters, further comprises:
adjusting, based on the initial temperature of the cooking cavity and the heating duration, an output power of the second heating device (530) to control a temperature of the second heating device (530) to raise to the second heating temperature;
the adjusting the output power of the second heating device (530), preferably comprises:
controlling the second heating device (530) to operate in a first mode, to adjust the output power of the second heating device (530);
the first mode is preferably a discontinuously heating mode.

5. The cooking method as claimed in claim 3, wherein when the type of the to-be-cooked food is meat, the controlling the first heating device (520), the second heating device (530), and the fan (540) to operate based on the cooking parameters, further comprises:
controlling the second heating device (530) to operate in a second mode, to control a temperature of the second heating device (530) to raise to the second heating temperature, wherein the second mode is a continuously heating mode.

6. The cooking method as claimed in claim 3, wherein the adjusting the output power of the first heating device (520), comprises:
determining, based on the initial temperature of the cooking cavity, a heating mode of the first heating device (520) during a first time period, wherein the first time period is shorter than the setting duration; and
adjusting, based on the determined heating mode of the first heating device (520), the output power of the first heating device (520) during the first time period.

7. The cooking method as claimed in claim 6, wherein the determining, based on the initial temperature of the cooking cavity, the heating mode of the first heating device (520), comprises:
(S221) in response to the initial temperature of the cooking cavity being lower than a first setting temperature, determining the heating mode of the first heating device (520) as a third mode; and
(S222) in response to the initial temperature of the cooking cavity being equal to or higher than the first setting temperature and lower than a second setting temperature, determining the heating mode of the first heating device (520) as a fourth mode.

8. The cooking method as claimed in claim 7, wherein the third mode is a continuously heating mode, and the fourth mode is a discontinuously heating mode.

9. The cooking method as claimed in claim 8, wherein (S222) the determining the heating mode of the first heating device (520) as the fourth mode in response to the initial temperature of the cooking cavity being equal to or higher than the first setting temperature and lower than the second setting temperature, comprises:
in response to the initial temperature of the cooking cavity being equal to or higher than the first setting temperature and lower than a first preset temperature, determining the heating mode of the first heating device (520) as a first discontinuously heating mode;
in response to the initial temperature of the cooking cavity being equal to or higher than the first preset temperature and lower than a second preset temperature, determining the heating mode of the first heating device (520) as a second discontinuously heating mode; and
in response to the initial temperature of the cooking cavity being equal to or higher than the second preset temperature and lower than the second setting temperature, determining the heating mode of the first heating device (520) as a third discontinuously heating mode;
wherein a power adjustment ratio of the first discontinuously heating mode, a power adjustment ratio of the second discontinuously heating mode, and a power adjustment ratio of the third discontinuously heating mode are different from each other, the first preset temperature and the second preset temperature are between the first setting temperature and the second setting temperature, and the first preset temperature is lower than the second preset temperature.

10. The cooking method as claimed in claim 7, wherein the adjusting the output power of the first heating device (520), further comprises:
controlling, during a second time period after the first time period, the first heating device (520) to heat in the third mode.

11. The cooking method as claimed in claim 10, wherein the adjusting the output power of the first heating device (520), further comprises:
controlling, during a third time period after the second time period, the first heating device (520) to heat in the fourth mode.

12. The cooking method as claimed in claim 11, wherein when the type of the to-be-cooked food is meat, the cooking method further comprises:
controlling, during the first time period to the second time period, the fan (540) to operate at a first rotating speed; and
controlling, during the third time period, the fan (540) to operate at a second rotating speed, wherein the first rotating speed is greater than the second rotating speed; or
when the type of the to-be-cooked food is vegetable, the cooking method further comprises:
controlling, during the first time period to the third time period, the fan (540) to operate at a third rotating speed; or
when the type of the to-be-cooked food is vegetable, the first time period is 1 minutes to 3 minutes, the second time period is 2 minutes to 4 minutes, and the third time period is 1 minutes to 6 minutes;
when the type of the to-be-cooked food is meat, the first time period is 1 minutes to 3 minutes, the second time period is 1 minutes to 3 minutes, and the third time period is 1 minutes to 6 minutes.

13. A control apparatus (400) for a cooking appliance (500, 900), wherein the cooking appliance (500, 900) is provided with a pot body (510), a first heating device (520), a second heating device (530) and a fan (540), the first heating device (520) is arranged below the pot body (510) and is configured to heat the pot body (510), the second heating device (530) is arranged above the pot body (510), the fan (540) is configured to circulate an airflow in the pot body (510), and the control apparatus (400) comprises:
an execution module (410), configured to acquire, in response to a cooking instruction received from a user, cooking parameters corresponding to a type of to-be-cooked food indicated by the cooking instruction, and control the first heating device (520), the second heating device (530), and the fan (540) to operate based on the cooking parameters; wherein the cooking instruction comprises the cooking parameters, and the cooking parameters comprise a first heating temperature for the first heating device (520), a second heating temperature for the second heating device (530), and a setting duration; and
a close module (420), configured to stop heating when a heating duration is longer than the setting duration.

14. A cooking appliance (500, 900), comprising:
a pot body (510);
a first heating device (520), arranged below the pot body (510) and configured to heat the pot body (510);
a second heating device (530), arranged above the pot body (510);
a fan (540), configured to circulate an airflow in the pot body (510);
a temperature detecting device (550), configured to acquire a temperature of a cooking cavity;
a processor (910), wherein the first heating device (520), the second heating device (530), and the fan (540) are electrically connected with the processor (910); and
a memory (920) coupled to the processor (910), wherein the memory (920) stores instructions therein, and the instructions, when being executed by the processor (910), cause a cooking method of any one of claims 1 to 12 to be implemented.

15. A computer-readable storage medium (1000), having program codes stored therein, wherein the program codes, when being executed by a processor (910), cause a method of any one of claims 1 to 12 to be implemented.
